# FASCICULE DE BREVET EUROPEEN

(11) **EP 1 003 976 B1**
(45) Date de publication et mention de la délivrance du brevet: **02.04.2003**
(21) Numéro de dépôt: 99957190.4
(22) Date de dépôt: 23.06.1999
(51) Int. Cl.: F16B 5/06, F16B 21/08

(54) **AGRAFE DE FIXATION**
HALTERUNGSKLEMME
FIXING CLIP

(30) Priorité: 23.06.1998 FR 9807893
(43) Date de publication de la demande: 31.05.2000
(73) Titulaire: Eurostyle (S.A.S.), 91370 Verrières le Buisson (FR)
(72) Inventeur: CHAUSSET, François, F-36250 Saint-Maur (FR)
(74) Mandataire: Viard, Jean
(86) Numéro de dépôt international: FR9901503
(87) Numéro de publication internationale: WO99067542

(56) Documents cités:
- DE-A- 1 910 167
- DE-A- 19 637 835
- FR-A- 2 351 296

## Description

La présente invention a pour objet une agrafe de fixation, destinée en particulier, mais non exclusivement, à la fixation de pièces en matière thermoplastique munies de telles agrafes sur des pièces métalliques, notamment dans la construction automobile, pour fixer les habillages intérieurs plastiques sur une carrosserie.

Traditionnellement, de telles fixations sont réalisées au moyen d'éléments discrets rapportés tels que des rivets, des agrafes en matière plastique, ou des vis dont le filet s'engage dans un trou ou ajour du support métallique ou plastique et dont la tête emprisonne la pièce en plastique à fixer. Si un tel assemblage est facilement démontable, il est coûteux parce qu'il conduit à réaliser des outillages complémentaires. De plus, cette fixation par éléments rapportés, nécessite un temps de main d'oeuvre important.

Une telle agrafe est connue, par exemple, du DE-A-19637835.

Lorsque l'intérieur d'un automobile est équipée d'un air bag ou coussin gonflant latéral de tête, il est nécessaire de retenir les habillages intérieurs après gonflement afin que celui-ci ne constitue pas un projectile pouvant blesser l'un des occupants de l'habitacle. Plus généralement, il est utile de pouvoir retenir une pièce après son déclipsage.

La présente invention a pour objet de pallier les inconvénients des agrafes connues et de permettre une retenue de la pièce précédemment agrafée après son déclipsage.

L'agrafe selon l'invention en matière plastique de fixation d'une pièce sur un support notamment métallique, comprend sur une embase, une première partie mâle d'encliquetage dans un ajour, une seconde partie mâle s'étendant dans le prolongement de la première partie, une sangle flexible solidaire de l'embase reliant celle-ci à une pièce femelle encliquetable dans ladite seconde partie mâle.
Dans la pièce femelle encliquetable dans la partie supérieure de l'agrafe sont prévus des moyens d'assemblage d'une pièce femelle solidaire de l'habillage.

Selon une mode de réalisation de l'invention, la partie inférieure de l'agrafe comprend un pilier à partir de l'extrémité libre duquel font saillie deux parois en "V" qui présentent, à leurs extrémités libres des becs d'encliquetage qui viennent en contact avec les bords du trou pour assurer une résistance ferme à la traction

La souplesse de la matière plastique permet l'introduction de la partie inférieure de l'agrafe dans l'orifice et l'escamotage des becs en saillie jusqu'à ce que l'agrafe occupe une position prédéfinie dans laquelle la tôle ou plus généralement le support prend appui entre l'embase de l'agrafe et les becs d'enclipsage.

L'embase avec ses bords rabattus permet de modifier la position des zones agressives. Les ailes du clip en "V" peuvent ainsi glisser sur les bords du support sans être agressées et permettent à celui-ci de prendre sa position définitive.

Lesdites pièces ne sont démontées qu'occasionnellement en fonction de problèmes particuliers. La matière thermoplastique constituant l'agrafe est donc choisie de manière à pouvoir subir sans dommage une vingtaine de montages et de démontages.

D'autres avantages de la présente invention apparaîtront au cours de la description qui va suivre d'un mode particulier de réalisation, donné uniquement à titre d'exemple non limitatif, en regard des figures qui représentent:
- la figure 1, une vue en perspective d'une agrafe selon l'invention;
- la figure 2 une vue en perspective de l'assemblage de l'agrafe de la figure 1 avec une pièce de liaison avec l'habillage à maintenir;
- la figure 3, une vue en coupe de l'assemblage d'une partie de l'habillage avec une agrafe selon l'invention;
- la figure 4, une vue en coupe du montage de l'agrafe et de l'habillage sur la carrosserie;
- la figure 5, une vue en coupe du démontage partiel de l'habillage de l'habillage.

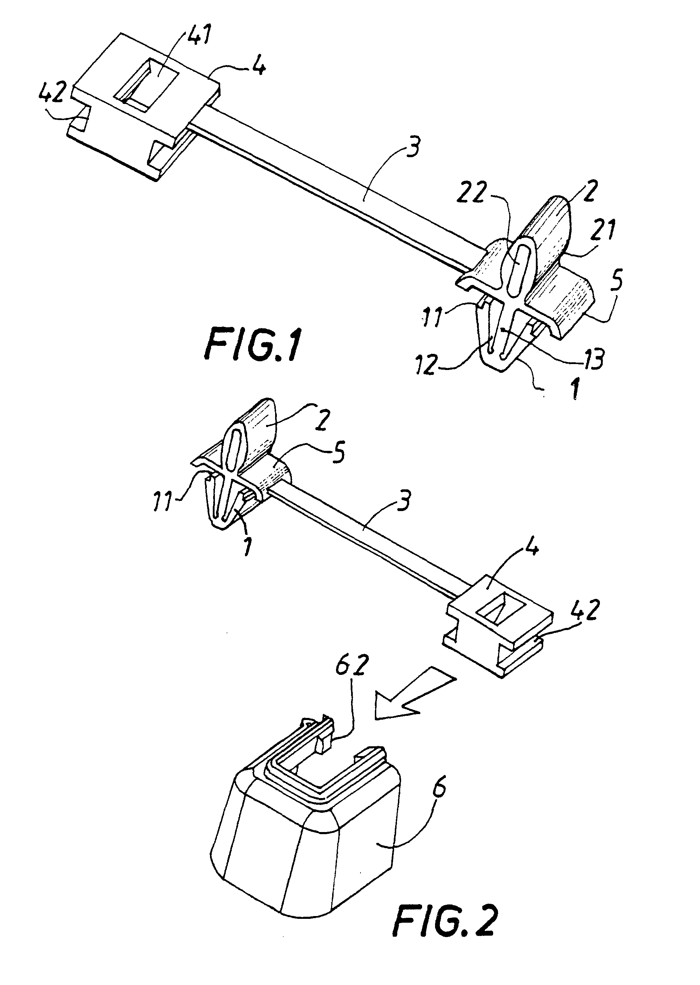

Sur les figures 1 à 5, les mêmes références désignent les mêmes éléments. Sur la figure 1, on voit que l'agrafe qui est moulée par injection d'une matière plastique comprend une embase 5 à partir de laquelle s'étend, vers le bas une première partie 1 destinée à être encliquetée dans un ajour d'une carrosserie. Dans l'exemple représenté, cette partie est en forme d'ancre et comprend un pilier 13 à partir de l'extrémité libre duquel font saillie deux parois 12 en "V" qui se rapprochent lors de l'insertion dans un trou pour reprendre leur forme d'origine après passage à travers le trou. Les parois 12 présentent, à leurs extrémités libres des becs d'encliquetage 11 qui viennent en contact avec les bords du trou ou ajour pour assurer une bonne résistance à la traction.

A partir de l'embase et, dans le prolongement du pilier 13, fait saillie une seconde partie 2 présentant une forme générale ovale constituée de deux parois 21 formant axialement d'un trou 22 ce qui lui donne une certaine élasticité en direction transversale. L'embase 5 est plane et de préférence ses bords latéraux sont recourbés en direction de la partie 1.

A partir de l'un des côtés de l'embase 5 s'étend un ruban flexible ou sangle 3 dont la seconde extrémité est solidaire d'une pièce 4. La pièce 4 est de forme sensiblement rectangulaire et présente dans sa partie centrale un orifice 41 dont la forme, généralement tronconique, et les dimensions de l'orifice permettent l'enclipsage de la pièce 4 sur la partie 2 de l'agrafe. Les côtés latéraux de la pièce 4 présentent deux glissières 42 destinées à permettre l'assemblage de la pièce 4 avec une pièce correspondante 6 solidaire de l'habillage comme cela sera décrit ci-dessous.

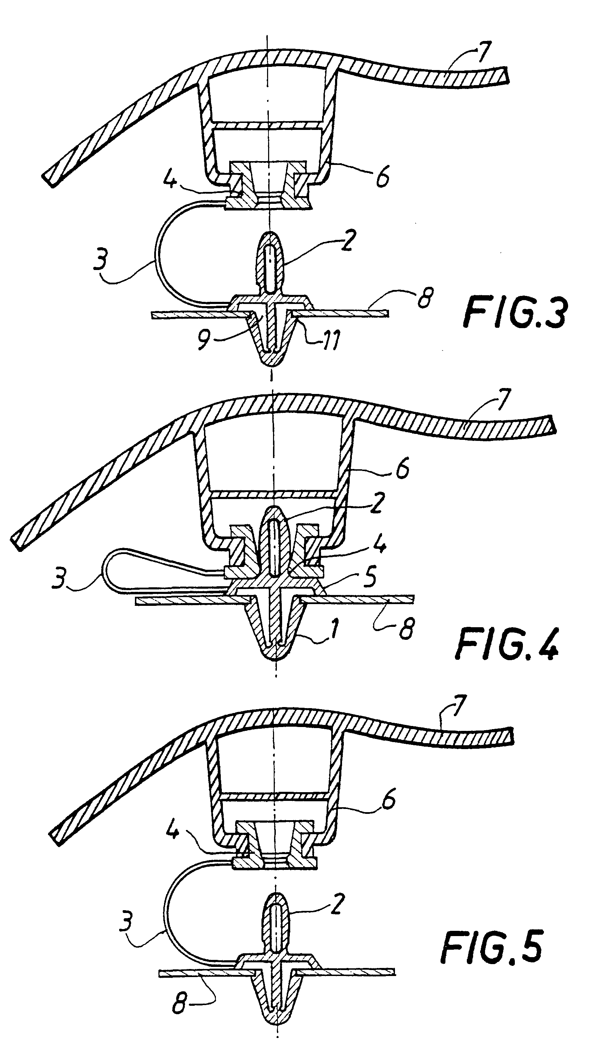

La pièce 6 est représentée sur la figure 2 et comme il est montré, elle présente à sa partie inférieure (qui est inversée sur la figure) deux tenons 62 destinés à coulisser dans les glissières 42 de la pièce 4. Dans le cas du montage d'un habillage sur une carrosserie de voiture, la pièce 6 est intégrée à l'habillage comme cela apparaît sur la figure 3. Sur cette figure on retrouve les pièces précédemment décrites en position de pré-assemblage. C'est à dire que l'agrafe 1,2 a été enclipsée dans un ajour 9 de la carrosserie 7. La bande flexible 3 a été pliée à 90° sur elle-même de sorte que la pièce 4 puisse être encliquetée sur la partie 2 de l'agrafe par un mouvement vers le bas de la figure. La pièce 6 est intégrée dans l'habillage 7 et la pièce 6 a été glissée dans les rainures 42 de la pièce 4.

La figure 4 représente l'assemblage de l'agrafe et de l'habillage 7 sur la carrosserie 8, c'est à dire la position des différents éléments au cours de l'utilisation normale. L'agrafe est maintenue sur la carrosserie par la partie 1 et ses becs d'encliquetage et l'habillage est maintenu sur l'agrafe par la liaison pièce 6-pièce 4, la pièce 4 étant maintenue sur l'agrafe par la partie 2 de celle-ci. On obtient ainsi, par un choix de matières appropriées la résistance mécanique suffisante pour que l'habillage soit maintenu dans les conditions d'usage ordinaires.

Si, toutefois, on doit démonter l'habillage 7, en vue, par exemple de procéder à son remplacement, il est aisé de le démonter en exerçant une traction suffisante sur l'habillage comme représenté sur la figure 5. La liaison entre la pièce 4 et la partie 2 étant moins résistante que celle existant entre l'agrafe et la carrosserie, cette traction se traduit par un déclipsage de la pièce 4 hors de la partie 2 de l'agrafe le ruban 3 permettant l'établissement d'un espace entre l'habillage 7 et l'agrafe. Cet espace permet soit de faire glisser la pièce 6 de l'habillage 7 sur la pièce 4, soit de couper purement et simplement le ruban 3. Il est en suite possible de faire tourner l'agrafe de 90° pour la dégager de l'ajour 9 puisque, dans l'exemple représenté, l'ajour et, par suite l'agrafe est rectangulaire.

Bien que la description qui précède ait été donnée en prenant comme exemple une agrafe à deux ailes destinée à pénétrer dans une découpe rectangulaire, il va de soi que la même structure peut être utilisée avec une agrafe de forme carrée ou circulaire. De même, bien qu'il soit avantageux économiquement que les pièces 6 soient intégrées l'habillage, il est évident qu'elles peuvent constituer des éléments discrets ou fixations non visibles.

## Revendications

1. Agrafe en matière plastique de fixation d'une pièce sur un support notamment métallique, comprenant sur une embase (5), une première partie mâle (1) d'encliquetage dans un ajour (9) du support, une seconde partie (2) mâle s'étendant dans le prolongement de la partie (1), une sangle flexible (3) solidaire de l'embase (5) reliant celle-ci à une pièce femelle (4) encliquetable dans la partie mâle (2).

2. Agrafe selon la revendication 1, **caractérisée en ce qu'**une pièce (6), solidaire de l'habillage (7), est montée sur la pièce femelle (4).

3. Agrafe selon l'une des revendications 1 ou 2, **caractérisée en ce que** la pièce femelle (4) présente un orifice central tronconique (41) pouvant s'enclipser sur la partie mâle (2) de l'agrafe.

4. Agrafe selon l'une des revendications 2 ou 3, **caractérisée en ce que** la pièce (4) présente, sur ses côtés latéraux des rainures (42) dans lesquelles peuvent glisser des tenons de la pièce (6).

5. Agrafe selon l'une quelconque des revendications précédentes, **caractérisée en ce que** la résistance à l'arrachement de la pièce (4) hors de la partie (2) est inférieure à la résistance à l'arrachement de la partie (1) hors de l'ajour (9).

## Claims

1. A plastic fastener for fixing a part on a support, particularly a metal support, comprising a base (5), a first male part (1) for engagement in an aperture (9) in the support, a second male part (2) extending in continuation of the part (1), a flexible band (3) secured to the base (5) and connecting the latter to a female part (4) engageable in the male part (2).

2. A fastener according to claim 1, **characterised in that** a part (6) secured to the covering (7) is mounted on the female part (4).

3. A fastener according to claim 1 or 2, **characterised in that** the female part (4) has a frusto-conical central orifice (41) adapted to clip on to the male part (2) of the fastener.

4. A fastener according to claim 2 or 3, **characterised in that** the part (4) has, on its sides, grooves (42) in which lugs of the part (6) can slide.

5. A fastener according to any one of the preceding claims, **characterised in that** the resistance of the part (4) to tearing out of the part (2) is less than the resistance of the part (1) to tearing from the aperture (9).

## Patentansprüche

1. Halterungsklemme aus Kunststoff für ein Teil auf einem Träger, insbesondere aus Metall, umfassend auf einem Sockel (5) einen ersten männlichen Teil (1) zum Einrasten in einen Durchbruch (9) des Trägers, einen zweiten männlichen Teil (2), der sich in der Verlängerung des Teils (1) erstreckt, ein mit dem Sockel (5) verbundenes flexibles Band (3), das diesen mit einem weiblichen Teil (4) verbindet, das in den männlichen Teil (2) einrastbar ist.

2. Halterungsklemme nach Anspruch 1, **dadurch gekennzeichnet, dass** ein mit einer Verkleidung (7) verbundenes Teil (6) auf dem weiblichen Teil (4) angebracht ist.

3. Halterungsklemme nach einem der Ansprüche 1 oder 2, **dadurch gekennzeichnet, dass** das weibliche Teil (4) eine zentrale kegelstumpfartige Öffnung (41) aufweist, die auf dem männlichen Teil (2) der Klemme einrasten kann.

4. Halterungsklemme nach einem der Ansprüche 2 oder 3, **dadurch gekennzeichnet, dass** das Teil (4) auf seinen Seiten Nuten (42) aufweist, in denen Ansätze des Teils (6) entlanggleiten können.

5. Halterungsklemme nach einem der vorhergehenden Ansprüche, **dadurch gekennzeichnet, dass** der Widerstand gegen das Abziehen des Teils (4) aus dem Teil (2) geringer ist als der Widerstand gegen das Abziehen des Teils (1) aus dem Durchbruch (9).
